(19) Europäisches Patentamt
European Patent Office
Office européen des brevets

(11) **EP 3 047 337 B1**

(12) **FASCICULE DE BREVET EUROPEEN**

(45) Date de publication et mention
de la délivrance du brevet:
**10.01.2018 Bulletin 2018/02**

(21) Numéro de dépôt: **14759187.9**

(22) Date de dépôt: **04.09.2014**

(51) Int Cl.:
**G04B 17/06** *(2006.01)*     **F16F 1/366** *(2006.01)*
**G04B 17/22** *(2006.01)*

(86) Numéro de dépôt international:
**PCT/EP2014/068864**

(87) Numéro de publication internationale:
**WO 2015/039881 (26.03.2015 Gazette 2015/12)**

(54) **OSCILLATEUR MECANIQUE POUR MOUVEMENT HORLOGER ET PROCEDE DE FABRICATION CORRESPONDANT**

MECHANISCHER OSZILLATOR FÜR UHRWERK UND VERFAHREN ZUR HERSTELLUNG DAVON

MECHANICAL OSCILLATOR FOR CLOCKWORK AND METHOD FOR MANUFACTURING THE SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.09.2013 FR 1358948**

(43) Date de publication de la demande:
**27.07.2016 Bulletin 2016/30**

(73) Titulaire: **Mahytec (Sarl)**
**39100 Dole (FR)**

(72) Inventeurs:
• **PERREUX, Dominique**
**F-25480 Pirey (FR)**
• **LALLEMENT, Gérard**
**F-25000 Besancon (FR)**

(74) Mandataire: **e-Patent SA**
**Rue Saint-Honoré 1**
**2000 Neuchâtel (CH)**

(56) Documents cités:
EP-A1- 2 602 671       WO-A1-2004/008259
WO-A2-2006/123095      FR-A1- 2 842 313
GB-A- 2 407 402        GB-A- 2 416 408

EP 3 047 337 B1

## Description

### Domaine technique

La présente invention concerne généralement un oscillateur mécanique thermocompensé et insensible aux champs magnétiques, pour mouvement horloger.

Plus particulièrement, l'invention concerne un ressort spiral pour un tel oscillateur mécanique, destiné à être associé à un balancier présentant un faible coefficient de dilatation thermique, le ressort spiral étant réalisé en un premier matériau composite comprenant des premières fibres longues intégrées dans une matrice composée d'un polymère thermodurcissable.

Par fibres longues, au sens de la présente invention, il faut comprendre que ces fibres s'étendent sensiblement sur toute la longueur du ressort spiral.

L'invention concerne également un procédé de fabrication d'un tel ressort spiral, un procédé de fabrication d'un ensemble balancier-spiral, ainsi qu'un mouvement horloger muni d'un tel oscillateur mécanique et une pièce d'horlogerie comportant un tel mouvement horloger.

### Etat de la technique

L'impact des champs magnétiques externes ou des variations de température sur la précision de marche des oscillateurs mécaniques de mouvements horlogers est bien connue. De nombreuses solutions ont déjà été proposées pour remplacer les alliages métalliques utilisés couramment pour réaliser le ressort spiral et/ou le balancier et tenter de limiter autant que possible l'influence de ces deux paramètres environnementaux auxquels sont soumises les pièces d'horlogerie.

A titre d'exemple, on notera que la demande de brevet EP 2407831 A1 mentionne la réalisation d'un ressort spiral en silicium, en diamant, voire en quartz, pour tenter de répondre au problème ci-dessus.

En alternative, des oscillateurs mécaniques répondant aux caractéristiques exposées plus haut ont déjà été décrits.

En particulier, le brevet GB 2416408 B décrit la réalisation d'un ensemble balancier-spiral, thermocompensé et insensible aux champs magnétiques externes, susceptible d'être composé de différents matériaux présentés dans ce document sous forme de listes relativement longues.

Il apparaît de l'enseignement de ce brevet que le balancier n'est sensible qu'aux variations de température contrairement au ressort spiral, qui est lui en outre sensible aux champs magnétiques. Ainsi, ce document se réfère à une demande antérieure du même inventeur, PCT/GB03/003000 (publiée sous le numéro WO 2004/008259 A1), pour ce qui concerne la réalisation du ressort spiral. L'utilisation de fibres longues de divers matériaux noyées dans une matrice réalisée en un polymère thermodurcissable est mentionnée dans cette demande PCT, notamment de fibres longues de carbone. Le ressort spiral ainsi constitué est censé présenter une variation sensiblement linéaire de son module d'élasticité dans la plage d'utilisation courante en températures d'une montre, soit entre 0 et 40°C. L'inventeur propose de compléter l'enseignement de cette demande PCT avec celui du brevet britannique ultérieur, dans lequel il expose comment réaliser un balancier dont le comportement, en fonction de la température, est complémentaire de celui du ressort spiral précédemment décrit. Dans ce but, il est prévu que le balancier comprenne des bras portant une serge, ces éléments étant réalisés en des matériaux respectifs présentant des comportements opposés en fonction de la température, de telle manière que le moment d'inertie du balancier varie peu avec la température. En effet, les déformations des bras, d'une part, et de la serge, d'autre part, se compensent mutuellement.

En ce qui concerne les matériaux aptes à permettre l'obtention de cet effet, le brevet britannique en fournit une liste générale importante mais se limite à l'évocation du principe de compensation des coefficients de dilatation thermique lorsqu'il s'agit d'indiquer comment choisir les matériaux qui peuvent remplir les conditions posées, sans fournir un seul exemple concret précis qui pourrait aider l'homme du métier à mettre en oeuvre l'invention concernée.

Cette approche de l'art antérieur est basée sur la résolution d'une équation ne laissant que peu de degrés de liberté pour définir des solutions possibles. En effet, la période des oscillations du balancier-spiral est donnée par l'équation suivante:

$$T = 2\pi \sqrt{\frac{J}{G}}$$

dans laquelle T est la période des oscillations, J est le moment d'inertie du balancier et G est le couple du ressort spiral.

Le couple du spiral est donné par:

$$G = \frac{EI}{L}$$

où E est le module d'Young du ressort spiral, L la longueur du ressort spiral et I le moment quadratique de la section droite du ressort spiral.

La variation relative de la période T par degré Celsius est alors:

$$2\frac{\Delta T}{T} = \frac{\Delta J}{J} + \frac{\Delta L}{L} - \frac{\Delta E}{E} - \frac{\Delta I}{I}$$

Lorsque le matériau du ressort spiral est isotrope, on a:

$$\frac{\Delta L}{L} - \frac{\Delta I}{I} = -3\alpha$$

où $\alpha$ est le coefficient de dilatation thermique du matériau du ressort spiral.

De manière similaire, on a:

$$\frac{\Delta J}{J} \approx 2\,\alpha_B$$

où $\alpha_B$ est le coefficient de dilatation thermique du matériau du balancier.

Comme conséquence de ce qui précède, pour minimiser l'impact de la température sur la période du balancier-spiral, il faut s'assurer que l'expression

$$2\,\alpha_B - \frac{\Delta E}{E} - 3\,\alpha$$

soit la plus faible possible.

L'inventeur des deux inventions de l'art antérieur présentées plus haut a donc proposé de remplir cette condition en minimisant, d'une part, les deux termes relatifs aux propriétés du ressort spiral et, d'autre part, le terme relatif aux propriétés du balancier, de telle manière que les valeurs résiduelles de l'une et l'autre partie se compensent finalement.

**Divulgation de l'invention**

Un but principal de la présente invention est de proposer une approche à la fois plus précise et plus souple de la problématique à considérer pour optimiser le choix des matériaux qui peuvent être utilisés pour réaliser un oscillateur mécanique, insensible aux champs magnétiques externes et aux variations de température. Un autre but de la présente invention est de proposer un procédé de fabrication simple du ressort spiral, voire de l'ensemble balancier-spiral complet.

Plus précisément, la Demanderesse a fait des recherches visant à prendre en compte les propriétés anisotropes de certains matériaux amagnétiques aptes à être utilisés pour réaliser un balancier-spiral. Ces recherches ont permis de définir des matériaux qui permettent d'obtenir un comportement optimal du balancier-spiral lorsqu'il subit des variations de température.

Ainsi, la présente invention concerne plus particulièrement un ressort spiral tel que mentionné plus haut, caractérisé par le fait que les premières fibres longues comprennent une part prépondérante de silice et, que le matériau composite utilisé pour la réalisation du ressort spiral comprend en outre au moins des secondes fibres longues prises dans le groupe comprenant des fibres de carbone et des fibres d'aramide, les secondes fibres longues étant également intégrées dans la matrice.

En effet, les fibres longues comprenant une part prépondérante de silice, d'une part, et les fibres de carbone ou d'aramide, d'autre part, présentent des comportements opposés en réponse à des variations de la température environnante. Aussi, la combinaison de tels matériaux au sein de la matrice, pour réaliser le ressort spiral, permet de limiter l'impact des variations de la température environnante sur le fonctionnement d'un balancier-spiral muni d'un tel ressort spiral.

Selon un mode de réalisation préféré de l'invention, les premières et secondes fibres longues sont sensiblement orientées suivant la direction longitudinale du ressort spiral, en étant préférablement sensiblement parallèles les unes aux autres. En outre, les premières et secondes fibres longues présentent avantageusement des diamètres respectifs inférieurs à 15$\mu$m, préférablement inférieurs à 12$\mu$m.

Cette caractéristique permet de garantir une meilleure homogénéité des propriétés du matériau à l'échelle du ressort spiral.

Par ailleurs, on prévoit avantageusement que la matrice représente une proportion volumique comprise sensiblement entre 20% et 40%, préférablement entre 25% et 35%, de l'ensemble du ressort spiral. La matrice peut avantageusement comprendre un polymère de type Epoxy.

De manière préférée, les secondes fibres longues comprennent des fibres prises dans le groupe comprenant des fibres de carbone de type T700SC, des fibres de carbone de type M40J et, des fibres d'aramide de type Kevlar®49.

De manière similaire, on peut préférablement prévoir que les premières fibres longues comprennent des fibres de quartz, des fibres de basalte et/ou des fibres de verre prises dans le groupe comprenant des fibres de verre de type S, de type E, ou de type H.

Par ailleurs, la présente invention concerne également un oscillateur mécanique comprenant un ressort spiral répondant aux caractéristiques qui viennent d'être exposées et associé à un balancier réalisé en un matériau présentant un coefficient de dilatation thermique sensiblement inférieur à 20.10-6 K$^{-1}$.

Le balancier est avantageusement réalisé en un second matériau composite comprenant des fibres de carbone intégrées dans une matrice préférablement composée d'un polymère thermodurcissable.

De manière générale, le balancier comprend un axe central duquel s'étendent au moins deux bras solidaires d'une serge. On prévoit préférablement que les bras et la serge sont réalisés d'une seule pièce et, que la serge comporte en outre des charges métalliques d'au moins un métal de type amagnétique. On peut également prévoir que le ressort spiral et le balancier sont réalisés d'une pièce.

La présente invention concerne également un mouvement horloger et une pièce d'horlogerie comportant un oscillateur mécanique répondant aux caractéristiques ci-dessus.

Par ailleurs, la présente invention concerne également un procédé de fabrication d'un ressort spiral répondant aux caractéristiques qui viennent d'être exposées, le procédé comportant les étapes consistant à:

- préparer une première bande en forme de parallélépipède et réalisée en un matériau préimprégné comprenant une matrice composée d'un polymère thermodurcissable contenant des premières fibres longues, comportant une part prépondérante de silice, et au moins des secondes fibres longues prises dans le groupe comprenant des fibres de carbone et des fibres d'aramide;
- mettre en forme un spiral en disposant la première bande sur un colimaçon sensiblement en forme de demi-ellipsoïde et présentant un arbre central de verrouillage;
- chauffer le spiral pour sécher le matériau préimprégné.

Dans une variante de réalisation préférée, l'étape de chauffage du spiral est réalisée avec application d'une pression sur le spiral pour former un ressort spiral plan.

Suivant un mode de réalisation préféré, le balancier peut être réalisé d'une pièce avec le ressort spiral. Dans ce cas, le procédé ci-dessus comporte des étapes additionnelles consistant à:

- rendre une seconde bande, sensiblement en forme de parallélépipède, solidaire de celle des extrémités de la première bande destinée à définir l'extrémité interne du spiral, par une première extrémité, de telle manière que les première et seconde bandes sont perpendiculaires, la seconde bande comportant au moins des première et seconde couches d'un matériau composite comprenant une matrice, composée d'un polymère thermodurcissable, et contenant des fibres de carbone, les fibres de carbone de l'une des couches présentant une orientation de +45° en référence à la direction de la première bande, tandis que les fibres de carbone de l'autre couche présentent une orientation de -45° en référence à la direction de la première bande;
- rendre une troisième bande, en forme de parallélépipède, solidaire de la seconde extrémité de la seconde bande, de telle manière que les seconde et troisième bandes sont perpendiculaires;
- agencer la seconde bande autour de l'arbre de verrouillage préalablement à la mise en forme du spiral;
- former un balancier avec la troisième bande, en la disposant autour d'au moins deux moules de formes adaptées, préalablement à l'étape de chauffage.

**Brève description des dessins**

D'autres caractéristiques et avantages de la présente invention apparaîtront plus clairement à la lecture de la description détaillée d'un mode de réalisation préféré qui suit, faite en référence aux dessins annexés donnés à titre d'exemples non limitatifs et dans lesquels :

- les figures 1a et 1b sont des graphiques illustrant des propriétés de certains matériaux pertinentes pour la mise en oeuvre de la présente invention;
- la figure 2 est un graphique illustrant une propriété supplémentaire d'un exemple de matériau adapté à la mise en oeuvre de la présente invention;
- la figure 3 est une vue schématique illustrant une première étape de mise en oeuvre d'un procédé de fabrication d'un ensemble balancier-spiral selon un mode de réalisation préféré de la présente invention;
- la figure 4 est une vue schématique illustrant une seconde étape de mise en oeuvre d'un procédé de fabrication d'un ensemble balancier-spiral selon un mode de réalisation préféré de la présente invention;
- la figure 5 est une vue schématique illustrant une troisième étape de mise en oeuvre d'un procédé de fabrication d'un ensemble balancier-spiral selon un mode de réalisation préféré de la présente invention;
- la figure 6 est une vue schématique illustrant une quatrième étape de mise en oeuvre d'un procédé de fabrication d'un ensemble balancier-spiral selon un mode de réalisation préféré de la présente invention;
- la figure 7 est une vue schématique illustrant une cinquième étape de mise en oeuvre d'un procédé de fabrication d'un ensemble balancier-spiral selon un mode de réalisation préféré de la présente invention, et
- la figure 8 est une vue en perspective simplifiée illustrant un ensemble balancier-spiral obtenu par la mise en oeuvre du procédé illustré sur les figures 3 à 7.

## Mode(s) de réalisation de l'invention

Lors de ses recherches, la Demanderesse est partie du principe que l'utilisation de matériaux anisotropes permet d'augmenter le nombre de degrés de liberté pour la résolution du problème posé, c'est-à-dire pour faire en sorte que la valeur de l'expression $2 \, \alpha_B - \dfrac{\Delta E}{E} - 3 \, \alpha$ soit la plus faible possible.

En effet, partant de l'équation présentée plus haut pour définir la période du balancier-spiral et, considérant que le spiral est réalisé en un matériau composite comprenant au moins deux types de fibres longues intégrées dans une matrice composée d'au moins un polymère, il faut alors considérer beaucoup plus de paramètres que ceux figurant dans l'expression qui vient d'être rappelée.

Chacune des phases, fibres ou matrice, a sa propre rigidité et ses propres coefficients de dilatation thermique, les fibres étant elles-mêmes anisotropes.

Notons $V_i$ la fraction volumique de chaque phase i du composite (fibre ou matrice), $E_x^i$ le module d'Young dans le sens des fibres (qui est également le sens de la longueur du ressort spiral, perpendiculaire à sa section droite), $\alpha_x^i$ le coefficient de dilatation thermique de la phase i dans le sens des fibres et $\alpha_y^i$ le coefficient de dilatation thermique de la phase i dans le sens transverse.

On peut alors considérer, en première approximation, qu'à l'échelle du ressort spiral le matériau composite est homogène et les paramètres utiles dans la définition de l'équation de la période des oscillations du balancier-spiral s'obtiennent de façon simple, par une homogénéisation:

$$E = \sum_i V_i \, E_x^i$$

$$\frac{\Delta E}{E} = \frac{\sum_i V_i \, \Delta E_x^i}{\sum_i V_i \, E_x^i} = \frac{\sum_i V_i \, E_x^i \beta_x^i}{\sum_i V_i \, E_x^i}$$

$$\alpha_x = \frac{\sum_i V_i \, E_x^i \alpha_x^i}{\sum_i V_i \, E_x^i}$$

$$\alpha_y = \sum_i V_i \, \alpha_y^i$$

avec toujours:

$$T = 2\pi \sqrt{\frac{JL}{EI}}$$

mais cette fois,

$$2\frac{\Delta T}{T} = \frac{\Delta J}{J} + \frac{\Delta L}{L} - \frac{\Delta E}{E} - \frac{\Delta I}{I}$$

devient:

$$2\frac{\Delta T}{T} = \frac{\Delta J}{J} + \alpha_x - \frac{\Delta E}{E} - 4\alpha_y$$

soit encore:

$$2\frac{\Delta T}{T} = 2\alpha_B + \frac{\sum_i V_i\, E_x^i \alpha_x^i - 4\sum_i V_i \alpha_y^i \sum_i V_i E_x^i - \sum_i V_i\, E_x^i \beta_x^i}{\sum_i V_i\, E_x^i}$$

Comme on peut le constater, le nombre de degrés de liberté disponibles pour assurer une variation minimale de la période des oscillations est beaucoup plus grand que dans le cas de l'art antérieur présenté plus haut.

Pour résoudre cette équation et choisir des matériaux adaptés, l'homme du métier peut ainsi considérer pour chaque matériau à disposition les valeurs des coefficients de dilatation thermique suivant les directions longitudinale et transverse, ainsi la valeur du module d'Young dans la direction longitudinale et la valeur de $\beta_x^i = \frac{\Delta E_x^i}{E_x^i}$. Ces grandeurs sont disponibles dans la littérature.

En faisant des recherches dans la littérature, la Demanderesse est parvenue à identifier quelques exemples de matériaux particulièrement adaptés à la mise en oeuvre de la présente invention, de manière non limitative.

En particulier, ces matériaux comprennent des premières fibres longues comportant une part prépondérante de silice (c'est-à-dire au moins 50% de silice), préférablement des fibres de verre, des fibres de basalte et/ou des fibres de quartz, qui sont associées à au moins des secondes fibres longues prises dans le groupe comprenant des fibres de carbone et des fibres d'aramide. De manière préférée, les fibres de carbone peuvent être choisies dans le groupe comprenant les fibres de type T700SC et les fibres de type M40J ou similaires (de telles fibres sont commercialisées par la société Torayca, voir http://www.torayca.com). Par ailleurs, les fibres de verre peuvent être choisies dans le groupe comprenant des fibres en verre de type S, des fibres en verre de type E et des fibres en verre de type H ou similaires (de telles fibres sont commercialisées par la société Owens Corning, voir http://www.owenscorning.com). Les fibres de quartz peuvent par exemple comporter des fibres de Quartzel® (commercialisées par la société Saint-Gobain, voir http://www.quartz.saint-gobain.com), tandis que des fibres commercialisées par la société Basaltex peuvent être utilisées pour les fibres de basalte (voir http://www.basaltex.com). Pour les fibres d'aramide, on pourra avantageusement utiliser du Kevlar®49 (ce matériau étant commercialisé par la société DuPont, voir http://www.dupont.com).

De manière avantageuse, on peut prévoir que la matrice comprend un polymère de type Epoxy.

Les fibres présentent préférablement une longueur correspondant sensiblement à la longueur du ressort spiral et sont avantageusement orientées suivant la direction longitudinale de ce dernier, en étant sensiblement parallèles les unes aux autres.

Par ailleurs, la Demanderesse a constaté que les fibres retenues devraient préférablement présenter un diamètre inférieur à 15μm, encore plus préférablement inférieur à 12μm, afin d'optimiser l'homogénéité du matériau composite à l'échelle du ressort spiral.

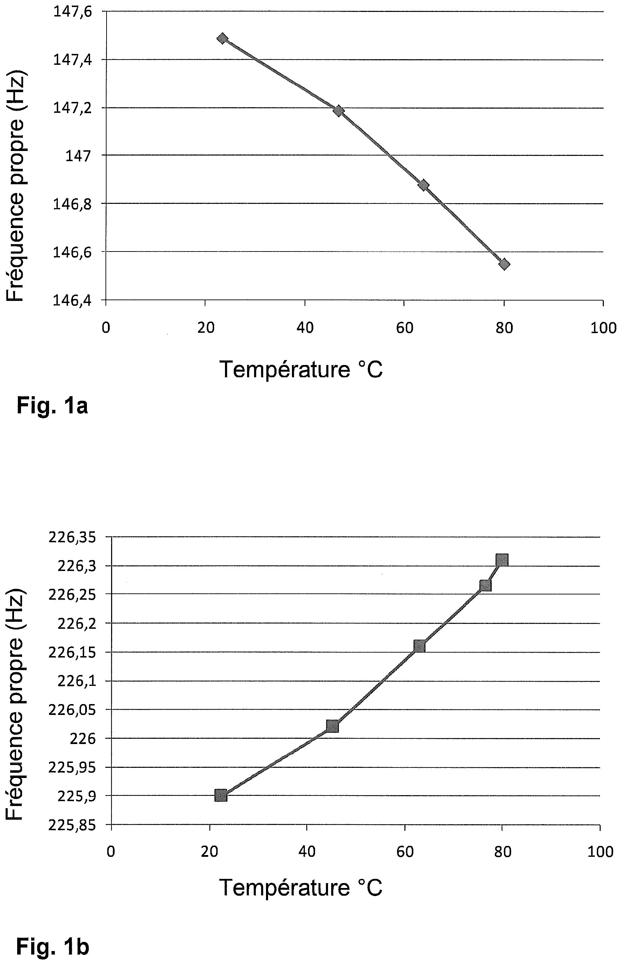

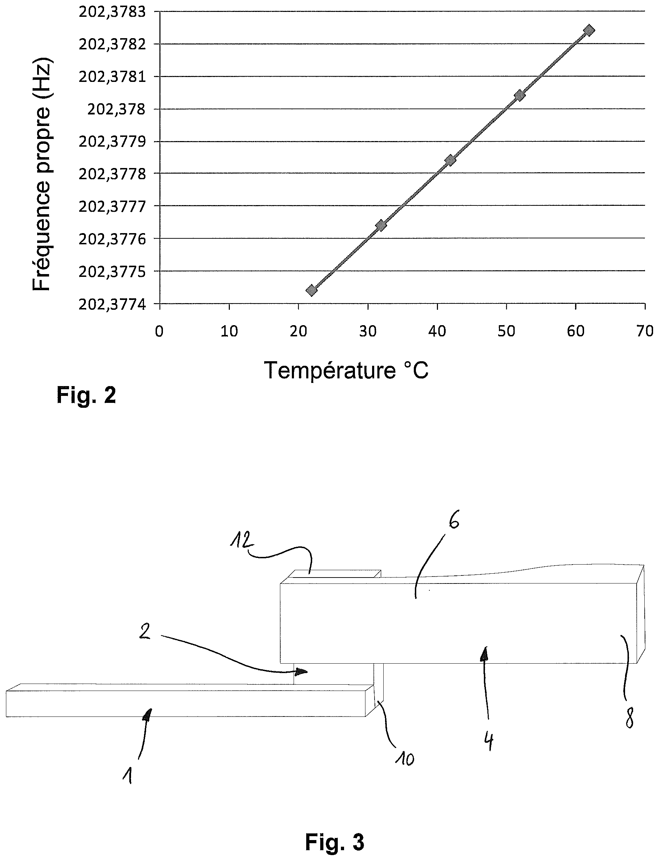

Les figures 1a, 1b et 2 permettent d'illustrer un exemple préféré de mise en oeuvre de la présente invention.

La figure 1a présente la variation de la fréquence propre d'une poutre vibrante en fonction de la température, la poutre étant réalisée en un matériau composite comprenant une matrice Epoxy et des fibres de verre de type S.

De manière similaire, la figure 1b présente la variation de la fréquence propre d'une poutre vibrante en fonction de la température, la poutre étant réalisée en un matériau composite comprenant une matrice Epoxy et des fibres de carbone de type T700SC.

Il ressort d'une comparaison des figures 1a et 1b que les deux matériaux composites concernés présentent des réponses opposées en fonction de la température, le matériau contenant des fibres de verre entraînant une baisse de la fréquence propre de la poutre lorsque la température augmente, tandis que le matériau contenant des fibres de carbone entraîne une augmentation de la fréquence propre de la poutre correspondante.

Sur la base du constat ci-dessus, la Demanderesse a évalué la pertinence à réaliser une poutre qui contiendrait à la fois des fibres de carbone et des fibres de verre, noyées au sein d'une même matrice composée de polymère. Elle a pu vérifier qu'il est possible de réaliser une poutre dont la fréquence propre n'évolue pas en fonction de la température.

Ainsi, à titre d'exemple illustratif non limitatif et, à partir des mesures qui ont donné lieu à l'établissement des graphiques des figures 1a et 1b, la Demanderesse a pu déterminer qu'une poutre qui comporte 49% de fibres T700SC, 21% de fibres de verre S et 30% de résine Epoxy donne une variation de sa fréquence très faible en fonction de la température. Cette variation est illustrée sur la figure 2, sur laquelle l'échelle verticale (fréquence propre) est nettement dilatée en référence aux figures 1a et 1b, de telle manière que la variation de la fréquence propre soit perceptible sur l'illustration.

En ce qui concerne le balancier, un mode de réalisation préféré non limitatif consiste à utiliser principalement des fibres de carbone longues et une résine Epoxy pour sa composition, la résine pouvant avantageusement être chargée en particules lourdes de type métallique (notamment du platine ou de l'iridium par exemple). La raideur des fibres de carbone associée à un coefficient de dilatation faible et légèrement négatif donne un balancier dont le moment d'inertie varie très peu en fonction de la température.

Les figures 3 à 8 illustrent un procédé de fabrication d'un ensemble balancier-spiral selon un mode de réalisation préféré de la présente invention.

Le procédé qui va être décrit peut facilement être adapté par l'homme du métier en fonction de ses besoins, en particulier pour fabriquer uniquement un ressort spiral indépendamment du balancier, par exemple.

Pour fabriquer un ressort spiral en forme de spirale d'Archimède et un balancier, le mode de réalisation préféré de la présente invention consiste à préparer un matériau préimprégné comportant une première bande 1 faite d'un mélange d'au moins deux fibres (de carbone et/ou d'aramide, d'une part, et de verre, de quartz et/ou de basalte, d'autre part) et d'une résine.

Cette première bande 1 présente avantageusement une épaisseur sensiblement comprise entre 30 et 150$\mu$m et une largeur sensiblement comprise entre 0.2 et 2mm, voire entre 0.5 et 2mm, lorsqu'il s'agit de réaliser un oscillateur mécanique pour une montre. La première bande 1 est destinée à former le ressort spiral.

Bien entendu, l'homme du métier ne rencontrera pas de difficulté particulière pour définir les dimensions nécessaires à la fabrication d'un oscillateur mécanique pour une pendule ou pour une horloge.

Une seconde bande 2, de liaison, est prévue. Celle-ci est préférablement composée de deux couches de matériaux composites à base de fibres de carbone et de résine Epoxy, dont l'une est orientée à -45 degrés et l'autre à +45 degrés, en référence à la direction longitudinale de la seconde bande.

Une troisième bande 4 est prévue pour la réalisation du balancier. Celle-ci est préférablement constituée d'un matériau préimprégné, comportant des fibres de carbone longues, et d'une résine Epoxy. L'épaisseur de la troisième bande 4 augmente après une première portion 6, d'épaisseur constante, vers sa seconde extrémité 8. L'augmentation de l'épaisseur peut être obtenue par ajout de plis de préimprégné ainsi que par l'ajout de charges métalliques. Ces dernières présentent avantageusement un diamètre moyen de l'ordre de quelques micromètres pour être correctement emprisonnées dans la matrice de polymère.

Tel qu'illustré sur la figure 3, les première et troisième bandes 1, 4 sont agencées à plat suivant des directions parallèles, la seconde bande 2 étant rendue solidaire de la première bande 1 par une première de ses extrémités 10 et de la troisième bande 4 par sa seconde extrémité 12. La seconde bande est orientée suivant une direction perpendiculaire en référence aux première et troisième bandes. La seconde bande est destinée à assurer la transmission des efforts en torsion entre le ressort spiral et le balancier.

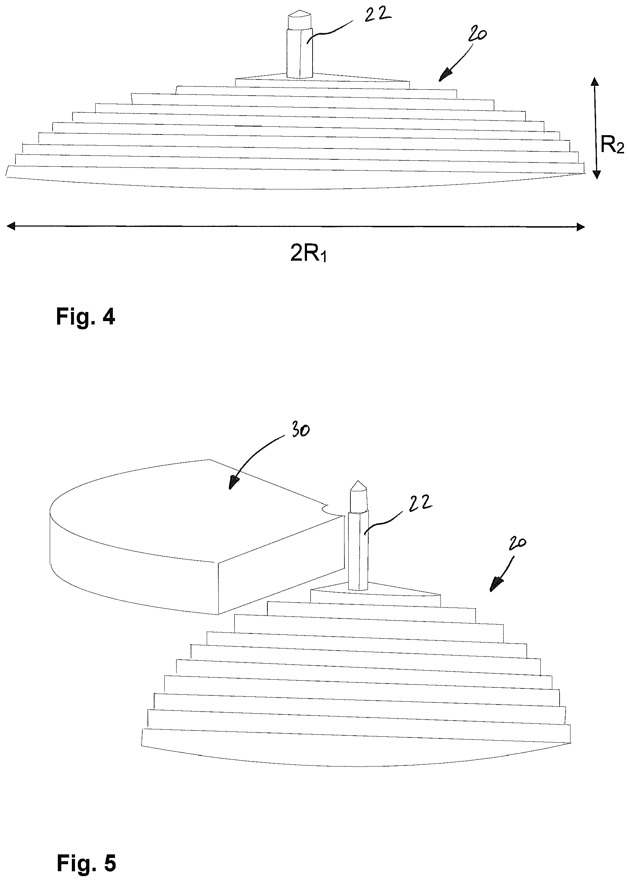

Une fois le préimprégné et les bandes 1, 2 et 4 préparés, le balancier spiral est mis en forme, tel qu'illustré sur la figure 4.

Dans ce but, on utilise préférablement un outil de mise en forme 20 ou colimaçon, présentant une forme de colimaçon en demi-ellipsoïde dont la base présente sensiblement la forme d'un disque, de manière à définir un chemin en forme de spirale d'Archimède à sa périphérie suivant la direction de sa hauteur. La spirale d'Archimède est visible sur le colimaçon lorsqu'il est vu de dessus sur la figure 4.

En section transversale, le colimaçon présente la forme d'une demi-ellipse de grand axe $2R_1$ et de petit axe $2R_2$, où $R_1$ correspond au rayon de la plus grande spire du ressort spiral qui sera obtenu et $R_2$ est au moins égal au nombre de tours du ressort spiral obtenu que multiplie la largeur de la première bande 1.

On peut éventuellement prévoir une terminaison plate sur le chemin ménagé à la périphérie du colimaçon 20 pour permettre au ressort spiral obtenu d'avoir une terminaison plate sur sa dernière spire.

Par ailleurs, l'ellipsoïde 20 est muni d'une ouverture centrale (non visible) destinée à recevoir un arbre de verrouillage 22 à section polygonale, carrée ici.

Le préimprégné est enroulé autour du colimaçon 20 en commençant par la seconde bande 2, de telle manière que cette dernière fasse au moins un tour complet autour de l'arbre de verrouillage 22 et ne puisse plus tourner par la suite. L'arbre de verrouillage 22 est alors logé dans le colimaçon. L'arbre de verrouillage 22 pourra être extrait du colimaçon en fin de fabrication et pourra éventuellement faire partie de l'ensemble balancier-spiral comme axe principal de rotation.

La première bande 1 est ensuite enroulée autour de la périphérie du colimaçon 20, en prenant soin d'appliquer une légère tension sur la première bande 1 pour éviter les glissements et les plis.

Après le spiral, le balancier est formé, tel que schématisé sur les figures 5, 6 et 7. Bien entendu, l'ordre de réalisation de ces deux composants est indifférent, le balancier pouvant être formé avant le spiral sans sortir du cadre de la présente invention.

De manière avantageuse, on utilise des moules 30 pour former le balancier, ici au nombre de quatre. Chacun de ces moules présente la forme d'un négatif de la forme que doit présenter une portion donnée du balancier à obtenir.

Pour former le balancier, on enroule la troisième bande 4 autour des moules 30 en commençant à partir du centre et avec un premier moule correspondant à la forme d'un quart de balancier, tel que schématisé sur la figure 5.

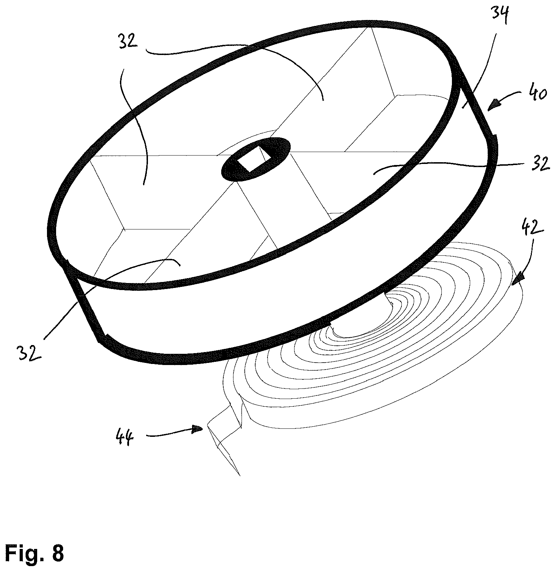

On forme ainsi deux premiers bras 32 du balancier et une première épaisseur d'un premier quart de sa serge 34 (visibles sur la figure 8).

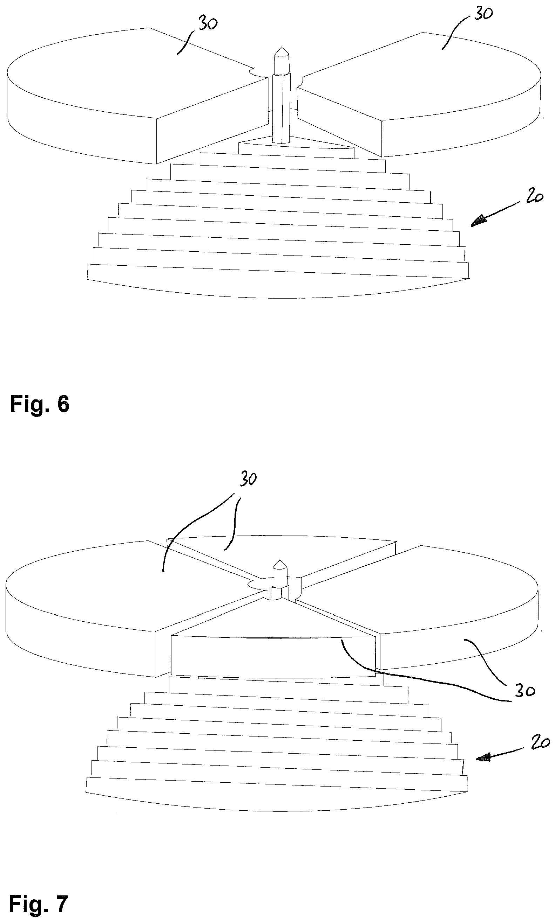

On positionne ensuite un second moule 30 dans le plan du premier moule, dans une position correspondant à un autre quart du balancier à former, et on enroule la troisième bande 4 autour de lui pour former deux bras 32 supplémentaires et une première épaisseur d'un second quart de la serge 34. Sur la figure 6, on a représenté un positionnement du second moule 30 en face du premier moule 30, à titre illustratif non limitatif. En alternative, il est possible de prévoir que le second moule 30 est positionné de manière à être adjacent à l'un ou l'autre des deux premiers bras 32, sans sortir du cadre de la présente invention.

Deux autres moules 30 sont ensuite ajoutés l'un après l'autre pour former les deux derniers quarts de la serge 34, comme illustré sur la figure 7.

Lorsque la structure de base est formée, on poursuit l'enroulement de la troisième bande 4 autour des moules 30 pour augmenter l'épaisseur de la serge 34.

La variation d'épaisseur de la troisième bande 4 est avantageusement ajustée de telle manière qu'à la fin de l'enroulement le balancier obtenu soit équilibré, c'est-à-dire que son barycentre soit très proche voire confondu avec son centre géométrique.

Une fois l'enroulement de la troisième bande 4 terminé, l'ensemble obtenu est placé dans un four, de manière à polymériser la matrice de chacune des trois parties de l'ensemble balancier-spiral.

La polymérisation est réalisée au cours d'une étape de chauffage d'une durée de quelques heures à une température comprise entre 120°C et 180°C, en fonction du polymère utilisé. L'homme du métier ne rencontrera pas de difficulté particulière pour adapter la durée et la température du chauffage en fonction de ses besoins, sans sortir du cadre de la présente invention.

Après polymérisation, le colimaçon 20 est retiré tandis que l'arbre de verrouillage 22 et les moules 30 sont maintenus en place. Le ressort spiral réalisé est souple mais pas encore plan.

Il est alors possible de glisser un disque fin, préférablement en acier, entre le balancier et le ressort spiral, avant de retourner l'ensemble de telle manière que le ressort spiral soit sur le dessus et repose sur le disque fin. Le seul poids du ressort spiral suffit en principe à rattraper une grande partie de sa troisième dimension, suivant la direction de son axe, pour qu'il devienne sensiblement plat. On peut ajouter une feuille métallique, par exemple, pour achever de rendre le ressort spiral plat, si nécessaire.

La remise à plat du ressort spiral est donc conduite au moyen de contraintes mécaniques entraînant des déformations élastiques.

L'ensemble est alors remis au four à une température de l'ordre de 120°C, entre 2 et 5 heures pour que, sous l'effet de la chaleur, des déformations viscoélastiques soient induites dans la matrice, qui vont permettre de supprimer toute contrainte transversale, de telle manière que l'état libre de contrainte devienne associé à une forme de ressort spiral plan.

Une fois le second chauffage terminé, on retire l'arbre de verrouillage 22 ou non, et on retire les moules 30 en mettant à profit le comportement thermoélastique des fibres de carbone qui composent pour une part le balancier et lui donnent sa résistance (sa masse étant essentiellement conférée par les charges métalliques).

Il est préférable ensuite de procéder à un ponçage de l'ensemble pour supprimer d'éventuelles coulures de résine.

L'ensemble balancier-spiral obtenu est illustré de manière schématique sur la figure 8, composé du balancier 40, comprenant ses quatre bras 32 et sa serge 34 réalisés d'une seule pièce, ainsi que le ressort spiral 42 incluant sa partie terminale plate 44 et l'axe central comportant ici l'arbre de verrouillage 22 ainsi que des portions des première et troisième bandes 1 et 4 et la seconde bande 2.

Dans le cas où le balancier ainsi obtenu ne serait pas suffisamment équilibré, il est toujours possible de procéder à une étape finale d'ajustement, en ajoutant des morceaux de résine par collage et/ou en meulant certaines zones périphériques de la serge 34 pour supprimer de la matière, en fonction des besoins.

Il ressort du procédé qui vient d'être décrit qu'il est possible d'obtenir, de cette manière, un ensemble balancier-spiral insensible aux champs magnétiques et présentant une grande stabilité en fonction de la température, par la mise en oeuvre d'étapes de fabrication relativement simples.

Comme déjà mentionné plus haut, l'homme du métier ne rencontrera pas de difficulté particulière pour fabriquer un ressort spiral seul ou un balancier seul à partir de la description qui précède et sans sortir du cadre de la présente invention.

La description qui précède s'attache à décrire un mode de réalisation particulier à titre d'illustration non limitative et, l'invention n'est pas limitée à la mise en oeuvre de certaines caractéristiques particulières qui viennent d'être décrites, comme par exemple la composition préférée divulguée pour le balancier associé au ressort spiral selon l'invention. A titre d'exemple, on notera qu'il est possible de prévoir que le matériau composite utilisé pour la réalisation du ressort spiral comporte plus que deux types de fibres longues. En effet, il est notamment possible de prévoir que ce matériau, outre des fibres de carbone et/ou d'aramide, comprend plusieurs types de fibres longues prises dans le groupe comprenant les fibres longues de verre, les fibres longues de basalte et les fibres longues de quartz.

L'homme du métier ne rencontrera pas de difficulté particulière pour adapter le contenu de la présente divulgation à ses propres besoins et réaliser un oscillateur mécanique répondant en partie aux caractéristiques qui viennent d'être présentées, sans sortir du cadre de la présente invention. De manière similaire, l'homme du métier ne rencontrera pas de difficulté particulière pour adapter le procédé qui a été décrit en fonction de ses propres besoins ou en relation avec des matériaux différents des matériaux décrits à titre d'exemple non limitatif dans la présente divulgation, voire pour réaliser un balancier présentant un nombre de bras différent de quatre.

## Revendications

1. Ressort spiral (42), destiné à être associé à un balancier (40) de mouvement horloger présentant un faible coefficient de dilatation thermique, le ressort spiral (42) étant réalisé en un premier matériau composite comprenant des premières fibres longues, s'étendant sensiblement sur toute la longueur du ressort spiral (42), intégrées dans une matrice composée d'un polymère thermodurcissable et comportant une part prépondérante - soit au moins 50% - de silice, ledit matériau composite comprenant en outre au moins des secondes fibres longues, s'étendant sensiblement sur toute la longueur du ressort spiral (42) et prises dans le groupe comprenant des fibres de carbone et des fibres d'aramide, lesdites secondes fibres longues étant également intégrées dans ladite matrice.

2. Ressort spiral (42) selon la revendication 1, **caractérisé en ce que** lesdites premières et secondes fibres longues sont sensiblement orientées suivant la direction longitudinale du ressort spiral (42).

3. Ressort spiral (42) selon la revendication 1 ou 2, **caractérisé en ce que** lesdites premières et secondes fibres longues présentent des diamètres respectifs inférieurs à $15\mu$m, préférablement inférieurs à $12\mu$m.

4. Ressort spiral (42) selon l'une quelconque des revendications précédentes, **caractérisé en ce que** ladite matrice représente une proportion volumique comprise sensiblement entre 20% et 40%, préférablement entre 25% et 35%.

5. Ressort spiral (42) selon l'une quelconque des revendications précédentes, **caractérisé en ce que** ladite matrice comprend un polymère de type Epoxy.

6. Ressort spiral (42) selon l'une quelconque des revendications précédentes, **caractérisé en ce que** lesdites premières fibres longues comprennent des fibres de quartz, des fibres de basalte et/ou des fibres de verre prises dans le groupe comprenant des fibres de verre de type S, de type E et de type H.

7. Oscillateur mécanique pour mouvement horloger comportant un ressort spiral (42) selon l'une quelconque des revendications 1 à 6 associé à un balancier (40), **caractérisé en ce que** ledit balancier (40) est réalisé en un matériau présentant un coefficient de dilatation thermique sensiblement inférieur à $20.10^{-6}$ K$^{-1}$.

8. Oscillateur mécanique selon la revendication 7, **caractérisé en ce que** ledit balancier (40) est réalisé en un second matériau composite comprenant des fibres de carbone intégrées dans une matrice préférablement composée d'un polymère thermodurcissable.

9. Oscillateur selon la revendication 8, ledit balancier comprenant un axe central (22) duquel s'étendent au moins deux bras (32) solidaires d'une serge (34), **caractérisé en ce que** lesdits bras (32) et ladite serge (34) sont réalisés d'une seule pièce et, **en ce que** ladite serge (34) comporte en outre des charges métalliques d'au moins un métal de type amagnétique.

10. Oscillateur selon l'une quelconque des revendications 7 à 9, **caractérisé en ce que** ledit ressort spiral (42) et ledit balancier (40) sont réalisés d'une seule pièce.

11. Mouvement horloger comportant un oscillateur mécanique selon l'une quelconque des revendications 7 à 10.

12. Pièce d'horlogerie comportant un mouvement horloger selon la revendication 11.

13. Procédé de fabrication d'un ressort spiral (42), destiné à être associé à un balancier (40) de mouvement horloger présentant un faible coefficient de dilatation thermique, **caractérisé en ce qu'**il comporte les étapes consistant à:

   - préparer une première bande (1) en forme de parallélépipède et réalisée en un matériau préimprégné comprenant une matrice composée d'un polymère thermodurcissable contenant des premières fibres longues, comportant une part prépondérante de silice, et au moins des secondes fibres longues prises dans le groupe comprenant des fibres de carbone et des fibres d'aramide;
   - mettre en forme un spiral en disposant ladite première bande (1) sur un colimaçon (20) sensiblement en forme de demi-ellipsoïde et présentant un arbre central de verrouillage (22);
   - chauffer ledit spiral pour sécher ledit matériau préimprégné.

14. Procédé selon la revendication 13, **caractérisé en ce qu'**il comporte une étape de chauffage supplémentaire dudit spiral réalisée avec application d'une pression sur ledit spiral pour former un ressort spiral (42) plan.

15. Procédé selon la revendication 13 ou 14, **caractérisé en ce qu'**il comporte des étapes additionnelles consistant à:

   - rendre une seconde bande (2), sensiblement en forme de parallélépipède, solidaire de celle des extrémités de ladite première bande (1) destinée à définir l'extrémité interne dudit spiral, par une première extrémité (10), de telle manière que lesdites première et seconde bandes (1, 2) sont perpendiculaires, ladite seconde bande (2) comportant au moins des première et seconde couches d'un matériau composite comprenant une matrice, composée d'un polymère thermodurcissable, et contenant des fibres de carbone, lesdites fibres de carbone de l'une des couches présentant une orientation de +45° en référence à la direction de ladite première bande (1), tandis que lesdites fibres de carbone de l'autre couche présentent une orientation de -45° en référence à la direction de ladite première bande (1);
   - rendre une troisième bande (4), en forme de parallélépipède, solidaire de la seconde extrémité (12) de ladite seconde bande (2), de telle manière que lesdites seconde et troisième bandes (2, 4) sont perpendiculaires;
   - agencer ladite seconde bande (2) autour dudit arbre de verrouillage (22) préalablement à la mise en forme dudit spiral;
   - former un balancier (40) avec ladite troisième bande (4), en la disposant autour d'au moins deux moules (30) de formes adaptées, préalablement à la première étape de chauffage.

**Patentansprüche**

1. Spiralfeder (42), die dazu bestimmt ist, einer Unruh (40) eines Uhrwerks zugeordnet zu sein, die einen geringen Wärmeausdehnungskoeffizienten aufweist, wobei die Spiralfeder (42) aus einem ersten Verbundmaterial hergestellt ist, das erste lange Fasern aufweist, die sich etwa über die gesamte Länge der Spiralfeder (42) erstrecken, die in eine Matrix integriert sind, die aus einem duroplastischen Polymer zusammengesetzt ist und einen vorherrschenden Anteil - das heißt, mindestens 50 % - Siliziumoxid aufweist, wobei das Verbundmaterial ferner mindestens zweite lange Fasern umfasst, die sich etwa über die gesamte Länge der Spiralfeder (42) erstrecken und zu der Gruppe gehören, die Carbonfasern und Aramidfasern umfasst, wobei die zweiten langen Fasern ebenfalls in die Matrix integriert sind.

2. Spiralfeder (42) nach Anspruch 1, **dadurch gekennzeichnet, dass** die ersten und zweiten langen Fasern etwa in der Längsrichtung der Spiralfeder (42) ausgerichtet sind.

3. Spiralfeder (42) nach Anspruch 1 oder 2, **dadurch gekennzeichnet, dass** die ersten und zweiten langen Fasern jeweilige Durchmesser unter 15 μm, vorzugsweise unter 12 μm, aufweisen.

4. Spiralfeder (42) nach einem der vorangehenden Ansprüche, **dadurch gekennzeichnet, dass** die Matrix einen Volumenanteil von etwa zwischen 20 % und 40 %, vorzugsweise zwischen 25 % und 35 %, inklusive aufweist.

5. Spiralfeder (42) nach einem der vorangehenden Ansprüche, **dadurch gekennzeichnet, dass** die Matrix ein Polymer vom Typ Epoxy umfasst.

6. Spiralfeder (42) nach einem der vorangehenden Ansprüche, **dadurch gekennzeichnet, dass** die ersten langen Fasern Quarzfasern, Basaltfasern und/oder Glasfasern umfassen, die aus der Gruppe ausgewählt sind, die Glasfasern vom Typ S, E und H umfasst.

7. Mechanischer Oszillator für Uhrwerk, aufweisend eine Spiralfeder (42) nach einem der Ansprüche 1 bis 6, die einer Unruh (40) zugeordnet ist, **dadurch gekennzeichnet, dass** die Unruh (40) aus einem Material hergestellt ist, das einen Wärmeausdehnungskoeffizienten etwa unter $20.10^{-6}$ K$^1$ aufweist.

8. Mechanischer Oszillator nach Anspruch 7, **dadurch gekennzeichnet, dass** die Unruh (40) aus einem zweiten Verbundmaterial hergestellt ist, das Carbonfasern umfasst, die in eine Matrix integriert sind, die vorzugsweise aus einem duroplastischen Polymer zusammengesetzt ist.

9. Oszillator nach Anspruch 8, wobei die Unruh eine zentrale Achse (22) umfasst, von der sich mindestens zwei Arme (32) erstrecken, die mit einem Kranz (34) fest verbunden sind, **dadurch gekennzeichnet, dass** die Arme (32) und der Kranz (34) aus einem einzigen Teil hergestellt sind und dass der Kranz (34) ferner metallische Chargen mindestens eines Metalls amagnetischen Typs aufweist.

10. Oszillator nach einem der Ansprüche 7 bis 9, **dadurch gekennzeichnet, dass** die Spiralfeder (42) und die Unruh (40) aus einem einzigen Teil gefertigt sind.

11. Uhrwerk, aufweisend einen mechanischen Oszillator nach einem der Ansprüche 7 bis 10.

12. Uhr, aufweisend ein Uhrwerk nach Anspruch 11.

13. Verfahren zur Herstellung einer Spiralfeder (42), die dazu bestimmt ist, einer Unruh (40) eines Uhrwerks zugeordnet zu sein, die einen geringen Wärmeausdehnungskoeffizienten aufweist, **dadurch gekennzeichnet**, es die folgenden Schritte aufweist:

   - Vorbereiten eines ersten Streifens (1) in parallelepipedischer Form und hergestellt aus einem vorimprägnierten Werkstoff, umfassend eine Matrix, die aus einem duroplastischen Polymer zusammengesetzt ist, das erste lange Fasern, aufweisend einen vorherrschenden Anteil Siliziumoxid, und mindestens zweite lange Fasern aus der Gruppe, die Carbonfasern und Aramidfasern umfasst, enthält,
   - Formen einer Spirale durch Anordnen des ersten Streifens (1) auf einer Schnecke (20) etwa in Form eines Halbellipsoids und aufweisend eine zentrale Verriegelungswelle (22),
   - Erwärmen der Spirale, um den vorimprägnierten Werkstoff zu trocknen.

14. Verfahren nach Anspruch 13, **dadurch gekennzeichnet, dass** es einen zusätzlichen Heizschritt der Spirale aufweist, der unter Anwendung eines Drucks auf die Spirale durchgeführt wird, um eine ebene Spiralfeder (42) zu bilden.

15. Verfahren nach Anspruch 13 oder 14, **dadurch gekennzeichnet, dass** es ergänzende Schritte umfasst, die darin bestehen:

   - festes Verbinden eines zweiten Streifens (2) etwa in Form eines Parallelepipeders mit dem der Enden des ersten Streifens (1), der bestimmt ist, das innere Ende der Spirale zu bilden, mittels eines ersten Endes (10) derart, dass der erste und zweite Streifen (1, 2) senkrecht sind, wobei der zweite Streifen (2) mindestens eine erste und zweite Schicht eines Verbundmaterials aufweist, das eine Matrix umfasst, die aus einem duroplastischen Polymer zusammengesetzt ist und Carbonfasern enthält, wobei die Carbonfasern einer der Schichten eine Ausrichtung von +45° in Bezug zur Richtung des ersten Streifens (1) aufweisen, wogegen die Carbonfasern der anderen Schicht eine Ausrichtung von -45° in Bezug zur Richtung des ersten Streifens (1) aufweisen,
- festes Verbinden eines dritten Streifens (4) in Form eines Parallelepipeders mit dem zweiten Ende (12) des zweiten Streifens (2) derart, dass der zweiten und dritte Streifen (2, 4) senkrecht sind,
- Anordnen des zweiten Streifens (2) um die Verriegelungswelle (22) vor der Formung der Spirale,
- Formen einer Unruh (40) mit dem dritten Streifen (4) durch Anordnen desselben um mindestens zwei entsprechend geformte Formen (30) vor dem ersten Heizschritt.

**Claims**

1. A balance-spring (42), intended to be associated with a clockwork movement balance (40) having a low thermal expansion coefficient, the balance-spring (42) being made from a first composite material comprising first long fibers, extending substantially over the entire length of the balance-spring (42), integrated into a matrix made up of a thermosetting polymer and including a preponderant part-or at least 50%-silica, said composite material further comprising at least second long fibers, extending substantially over the entire length of the balance-spring (42) and taken from the group comprising carbon fibers and aramid fibers, said second long fibers also being integrated into said matrix.

2. The balance-spring (42) according to claim 1, **characterized in that** said first and second long fibers are substantially oriented along the longitudinal direction of the balance-spring (42).

3. The balance-spring (42) according to claim 1 or 2, **characterized in that** said first and second long fibers have respective diameters smaller than 15 $\mu$m, preferably smaller than 12 $\mu$m.

4. The balance-spring (42) according to any one of the preceding claims, **characterized in that** said matrix represents a volume proportion substantially comprised between 20% and 40%, preferably between 25% and 35%.

5. The balance-spring (42) according to any one of the preceding claims, **characterized in that** said matrix comprises a polymer of the epoxy type.

6. The balance-spring (42) according to any one of the preceding claims, **characterized in that** said first long fibers comprise quartz fibers, basalt fibers and/or glass fibers taken from the group comprising glass fibers of type S, type E and type H.

7. A mechanical oscillator for a clockwork movement including a balance-spring (42) according to any one of claims 1 to 6 associated with a balance (40), **characterized in that** said balance (40) is made from a material having a thermal expansion coefficient substantially less than $20.10^{-6}$ K$^{-1}$.

8. The mechanical oscillator according to claim 7, **characterized in that** said balance (40) is made from a second composite material comprising carbon fibers integrated into a matrix, preferably made up of a thermosetting polymer.

9. The oscillator according to claim 8, said balance comprising a central axis (22) from which at least two arms (32) extend secured to a felloe (34), **characterized in that** said arms (32) and said felloe (34) are made in a single piece, and **in that** said felloe (34) further includes metal fillers of at least one metal of the nonmagnetic type.

10. The oscillator according to any one of claims 7 to 9, **characterized in that** said balance-spring (42) and said balance (40) are made in a single piece.

11. A clockwork movement including a mechanical oscillator according to any one of claims 7 to 10.

12. A timepiece including a clockwork movement according to claim 11.

13. A method for manufacturing a balance-spring (42), intended to be associated with a clockwork movement balance (40) having a low thermal expansion coefficient, **characterized in that** it includes the following steps:

- preparing a first parallelepiped strip (1) made from a pre-impregnated material comprising a matrix made up of a thermosetting polymer containing first long fibers, including a preponderant portion of silica, and at least second long fibers taken from the group comprising carbon fibers and aramid fibers;
- shaping a spiral by arranging said first strip (1) on a snail (20) substantially with a half-ellipsoid shape and having a central locking arbor (22);
- heating said spiral to dry said preimpregnated material.

14. The method according to claim 13, **characterized in that** it includes an additional heating step of said spiral done with an application of pressure on said spiral to form a planar balance-spring (42).

15. The method according to claim 13 or 14, **characterized in that** it includes additional steps consisting of:

- securing a second strip (2), substantially parallelepiped, to that of the ends of said first strip (1) intended to define the inner end of said spiral, by a first end (10), such that said first and second strips (1, 2) are perpendicular, said second strip (2) including at least first and second layers of a composite material comprising a matrix, made up of a thermosetting polymer, and containing carbon fibers, said carbon fibers of one of the layers having an orientation of +45° in reference to the direction of said first strip (1), while said carbon fibers of the other layer have an orientation of -45° in reference to the direction of said first strip (1);
- securing a third strip (4), with a parallelepiped shape, to the second end (12) of said second strip (2), such that said second and third strips (2, 4) are perpendicular;
- arranging said second strip (2) around said locking arbor (22) prior to shaping said spiral;
- forming a balance (40) with said third strip (4), while arranging it around at least two molds (30) with suitable shapes, prior to the first heating step.

**Fig. 1a**

**Fig. 1b**

**Fig. 2**

**Fig. 3**

**Fig. 4**

**Fig. 5**

**Fig. 6**

**Fig. 7**

**Fig. 8**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2407831 A1
- GB 2416408 B
- GB 03003000 W
- WO 2004008259 A1